# EUROPÄISCHE PATENTSCHRIFT

(11) **EP 1 973 216 B1**
(45) Veröffentlichungstag und Bekanntmachung des Hinweises auf die Patenterteilung: **29.07.2009**
(21) Anmeldenummer: 08002678.4
(22) Anmeldetag: 13.02.2008
(51) Int. Cl.: H02K 1/18

(54) **Motorträger und Verfahren zu dessen Herstellung**
Motor mounting and method for its production
Support de moteur et son procédé de fabrication

(30) Priorität: 21.03.2007 DE 102007013591
(43) Veröffentlichungstag der Anmeldung: 24.09.2008
(73) Patentinhaber: Schürholz GmbH & Co. KG, 58840 Plettenberg (DE)
(72) Erfinder: Freese, Wilfried, 26135 Oldenburg (DE); Specht, Franz Josef, 58840 Plettenberg (DE)
(74) Vertreter: Wunderlich, Rainer

(56) Entgegenhaltungen:
- US-A- 3 387 153
- US-A- 3 914 071
- US-A- 5 434 729
- US-A1- 2004 114 842
- US-A1- 2006 208 580

## Beschreibung

Die Erfindung betrifft einen Motorträger für einen Elektromotor, mit einer plattenförmigen Basis, einem daran angeordneten Sockel zur Aufnahme des Stators und einem am Sockel angeordneten Achsbolzen zum Lagern des Rotors. Weiter betrifft die Erfindung ein Verfahren zum Herstellen eines Motorträgers für einen Elektromotor.

Derartige Motorträger sind seit langem im Einsatz. Die Basis dient als ein Halteflansch zum Anbringen des Motors. Auf dem Sockel wird der Stator befestigt, während der Rotor innerhalb des Stators an dem Achsbolzen drehbar gelagert ist. Es ist bekannt, derartige Motorträger als Stanzbiegeteil herzustellen. Hierzu wird aus einem Ausgangsblech die plattenförmige Basis gestanzt und umgeformt, wobei der mittige Sockelbereich zur Aufnahme des Stators durch Kaltumformung ausgeformt wird. Zur Aufnahme des Achsbolzens wird am Sockel in einem oder mehreren Tiefziehschritten ein hülsenförmiger Aufnahmebereich geformt, in welchen der Achsbolzen mittels Presspassung eingebracht und so befestigt wird. Allerdings ist im Mittenbereich der plattenförmigen Basis das zur Verfügung stehende Blechmaterial zur Ausformung des Sockels und zum Ausbilden des hülsenförmigen Aufnahmebereiches begrenzt. Steht keine ausreichende axiale Länge des Aufnahmebereichs zur Verfügung, kann für einen gewünschten Achsbolzen keine hinreichend zuverlässige Presspassung erreicht werden.

Ein gattungsgemäßer Motorträger ist aus der US 2004/0114842 A1 bekannt. Zur Reduzierung der Herstellungsschritte sind zur Lagerung des Rotors die Laufflächen für die Lagerwälzkörper direkt auf dem Achsbolzen ausgebildet, welcher in eine dünnwandige Hülse eingepresst ist.

Aus der US 3,914,071 geht ein Lüfter mit einem massiven gegossenen Grundrahmen mit Luftdurchgängen hervor, wobei ein Achsbolzen für einen Elektromotor in dem Grundrahmen befestigt ist. Der Achsbolzen ist über eine Gussmasse mit dem Grundrahmen verbunden, wobei beim Vergießen der Achsbolzen und der Grundrahmen für längere Zeit exakt zueinander positioniert bleiben müssen, bis die Gussmasse ausgehärtet ist.

Weiter ist es bekannt, derartige Motorträger durch Gießen herzustellen. Hierbei besteht keine Beschränkung bei der Dimensionierung bei der axialen Länge eines Aufnahmebereiches. Allerdings wird aufgrund gusstechnischer Notwendigkeiten gegenüber einem Blechteil mehr Material benötigt, was insbesondere bei Kraftfahrzeugteilen zu einer unerwünschten Gewichtserhöhung führen kann. Zudem sind Gussteile aufgrund der Werkzeugkosten und des Energieaufwandes in der Herstellung relativ teuer und bedürfen zudem aufgrund der unvermeidbaren Schrumpfung beim Abkühlen des Gussteiles häufig einer mechanischen Nachbearbeitung.

Der Erfindung liegt die **Aufgabe** zugrunde, einen Motorträger anzugeben, welcher besonders robust ist und effizient hergestellt werden kann. Eine weitere Aufgabe der Erfindung ist es, ein Verfahren zur effizienten Herstellung des Motorträgers anzugeben.

Die Erfindung wird zum einen durch einen Motorträger mit den Merkmalen des Anspruchs 1 und zum anderen durch ein Verfahren mit den Merkmalen des Anspruchs 9 gelöst. Bevorzugte Ausführungsformen sind in den abhängigen Ansprüchen angegeben.

Der erfindungsgemäße Motorträger ist dadurch gekennzeichnet, dass der Sockel gegossen ist, wobei der Achsbolzen als separates Teil durch Eingießen mit dem Sockel verbunden ist, und dass die plattenförmige Basis als Blechteil geformt ist, an welchem der Sockel angebracht ist.

Gemäß der Erfindung wird der Achsbolzen zuverlässig dadurch befestigt, dass der Achsbolzen beim Gießen des Sockels in diesen eingegossen wird. Es wird also der Sockel als separates Teil hergestellt, wobei bei dessen Herstellung ein bereits gefertigter Achsbolzen so in die Gussform mit eingebracht wird, dass eine feste und genaue Lage des Achsbolzens im Sockel gegeben ist. Die plattenförmige Basis hingegen wird als ein Blechteil geformt, an welcher der gegossene Sockel mit dem eingegossenen Achsbolzen angebracht wird.

Dieser erfindungsgemäße Aufbau bringt mehrfache Vorteile. Zunächst ist es möglich, den Motorträger modular zu konzipieren, so dass etwaige Änderungen lediglich des Achsbolzens, des Sockels oder nur der plattenförmigen Basis eine einfache Änderung lediglich eines einzelnen Teiles bewirken, während die anderen Teile unverändert bleiben. Dies spart Kosten und erlaubt eine große Typenvielfalt bei relativ geringem Aufwand. Die relativ flächige plattenförmige Basis kann kostengünstig aus einem Blech hergestellt werden. Der präzis zu formende Sockel, welcher mit hoher Genauigkeit den Achsbolzen und den Stator des Elektromotors aufzunehmen hat, kann durch Gießen, insbesondere durch Druckguss, mit hoher Formgenauigkeit hergestellt werden. Der Achsbolzen kann als separates Dreh-, Stanz- oder Kaltumformteil mit exakten Eigenschaften zur Aufnahme des drehbar gelagerten Rotors ausgebildet werden. Die einzelnen Teile sind hinsichtlich Material und Fertigungsart optimiert, was die Qualität erhöht und Herstellungskosten senkt. Die verschiedenen Materialien und die jeweiligen Fügetechniken führen zu einem sehr guten schwingungsdämpfenden Verhalten des gesamten Motorträgers. Gleiches gilt für das thermische Verhalten.

Grundsätzlich kann der Sockel auf jede beliebige Weise mit der plattenförmigen Basis verbunden sein. Eine besonders einfache und stabile Befestigung wird erfindungsgemäß dadurch erreicht, dass der Sockel einen Einpressbereich mit einer Schulter aufweist und dass in der Basis eine Einpressöffnung ausgebildet ist, in welche der Sockel mit seinem Einpressbereich bis zur Schulter mit Presspassung eingefügt ist. Die Schulter ist durchmessergrößer als der Einpressbereich, so dass die Schulter einen Anschlag beim Einpressen bildet und so für eine exakte Positionierung zwischen Sockel und Basis sorgt. Der Einpressbereich und die passende Einpressöffnung sind üblicherweise kreisrund ausgebildet, können jedoch ohne weiteres viereckig sein oder eine andere polygonale Form aufweisen.

Besonders bevorzugt ist es nach der Erfindung, dass am Einpressbereich und der Einpressöffnung mindestens ein radiales Formelement zum Bilden einer in Umfangsrichtung wirkenden Formschlussverbindung angeordnet ist. Grundsätzlich ist die Presspassung derart dimensioniert, dass allein der Reibschluss eine zuverlässige Befestigung in axialer Richtung und in Umfangsrichtung sicherstellt. Als eine zusätzliche Sicherheit können radiale Vorsprünge oder Rücksprünge, beispielsweise Nasen und Ausnehmungen, vorgesehen sein, die in Umfangsrichtung eine zusätzliche Formschlussverbindung sicherstellen.

Beim Einpressen des Sockels in die Basis entsteht Reibschluss entlang des Umfangs des Einpressbereiches am Sockel. Da der Sockel etwa im Vergleich gegenüber dem Achsbolzen einen sehr viel größeren Durchmesser und somit eine entsprechend gro-βe Reibschlussfläche aufweist, ist grundsätzlich der Kontakt mit der Basis entlang der einfachen Werkstückdicke ausreichend, welche im Millimeterbereich liegen kann. Eine zusätzliche Sicherheit der Befestigung kann erfindungsgemäß dadurch erreicht werden, dass die Basis entlang der Einpressöffnung eine Auskragung aufweist. Zur Auskragung kann ein Randbereich gegenüber der Basis etwa rechtwinklig hochgestellt sein, so dass entlang der Einpressöffnung eine hülsenförmige Auskragung gebildet ist.

Eine besonders stabile Verbindung zwischen dem Achsbolzen und dem Sockel wird erfindungsgemäß dadurch erzielt, dass der Achsbolzen zur Verbindung mit dem Sockel zumindest bereichsweise aufgeraut, insbesondere mit einer Rändelung, Riffelung oder Nuten versehen ist. Beim Eingießen des Achsbolzens in den Sockel wird somit eine innige Materialverbindung zwischen Sockel und Achsbolzen hergestellt. Es kann sich so nicht nur eine materialschlüssige sondern auch eine kraft- und formschlüssige Verbindung zwischen beiden Teilen ergeben.

Grundsätzlich kann der Sockel auf beliebige Weise gefertigt sein, etwa als Drehteil oder Schmiedeteil. Besonders bevorzugt ist es jedoch nach der Erfindung, dass der Sockel als Aluminium-Druckgussteil gefertigt ist. Dieses ist bei größeren Stückzahlen kostengünstig herstellbar und weist ein relativ geringes Gewicht auf. Zudem führt die Kombination Aluminium mit dem umgebenden Stahlblechteil zu einer sehr guten Schwingungsdämpfung. Aluminium-Druckguss ist zudem sehr formgenau, was für die Aufnahme des Stators, welcher in der Regel ein Blechplattenpaket umfasst, sehr vorteilhaft ist.

Weiter ist es erfindungsgemäß, dass die Basis, der Sockel und der Achsbolzen als modulare Bauteile vorgesehen sind. Gemäß der Erfindung ist ein Motorträger konsequent in seine drei wesentlichen Funktionskomponenten aufgeteilt, nämlich die Basis, den Sockel und den Achsbolzen. Änderungen etwa am Stator oder dem Rotor führen somit lediglich zu Änderungen des Sockels beziehungsweise des Achsbolzens. Das oder die anderen Teile können unverändert bleiben. Wird zudem etwa ein geändertes Lochbild oder andere Änderungen an der plattenförmigen Basis verlangt, so wäre in diesem Fall lediglich das Stanzbiegewerkzeug für die plattenförmige Basis zu ändern, während die Werkzeuge für Sockel und Achsbolzen unverändert bleiben könnten.

Gemäß der Erfindung ist vorgesehen, dass an dem Sockel ein Stator und an dem Achsbolzen ein Rotor angeordnet sind, wobei ein Elektromotor gebildet ist. Der Stator kann üblicherweise ein Blechplattenpaket aufweisen. Weiter kann auch am Stator eine Spulenanordnung oder Permanentmagnete vorgesehen sein. Wie auch der Stator ist auch der Rotor in bekannter Weise wie bei üblichen Elektromotoren ausgebildet. Der Rotor kann eine Lagerung zur drehbaren Anordnung auf dem Achsbolzen sowie eine Spulenanordnung mit Stromaufnahme aufweisen.

Das erfindungsgemäße Verfahren ist dadurch gekennzeichnet, dass ein Sockel gegossen und dabei ein Achsbolzen als separates Teil eingegossen wird und dass der Sockel mit dem Achsbolzen an einer aus Blech gefertigten, plattenförmigen Basis befestigt wird. In diesem Verfahren kann insbesondere der vorstehend beschriebene Motorträger effizient hergestellt werden. Notwendige Änderungen am Motorträger können lediglich auf einzelne Komponenten beschränkt werden, was eine flexible und wirtschaftliche Anpassung an Änderungen ermöglicht.

Die Erfindung wird nachfolgend anhand von bevorzugten Ausführungsbeispielen näher erläutert, welche schematisch in der einzigen Figur dargestellt sind. In den Zeichnungen zeigen:
- Fig. 1: eine perspektivische Ansicht eines ersten erfindungsgemäßen Motorträgers;
- Fig. 2: eine vergrößerte Querschnittsansicht durch den Motorträger von Fig. 1; und
- Fig. 3: eine Querschnittsansicht durch eine weitere Ausführungsform eines erfindungsgemäßen Motorträgers.

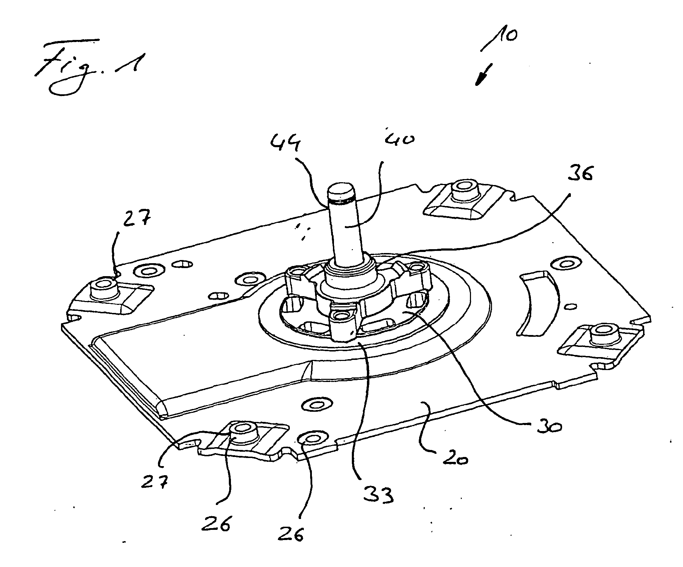

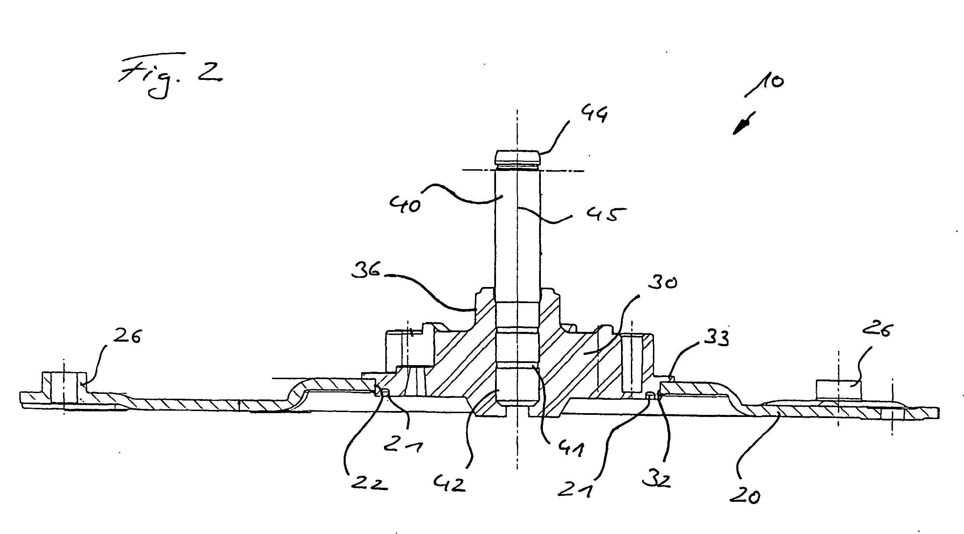

Ein bevorzugtes Ausführungsbeispiel eines erfindungsgemäßen Motorträgers 10 gemäß Fig. 1 und Fig. 2 umfasst eine plattenförmige Basis 20. Die Basis 20 ist aus einem Blech ausgestanzt, wobei zur Befestigung des Motors an Trägern oder Bauteilen Befestigungsabschnitte 26 eingeprägt und ausgestanzt sind. Hierbei sind auch Befestigungshülsen 27 ausgebildet. Zum Bilden einer mittig zur Mittenebene der plattenförmigen Basis 20 angeordneten Einpressöffnung 22 ist eine kreisförmige Ausstanzung mittig zu einer Achse 45 ausgebildet. In die mittige Einpressöffnung 22 ist mittels Presspassung ein gegossener Sockel 30 eingepresst. Hierzu weist der Sockel 30 einen zylindrischen Einpressbereich 32 und eine radial nach außen vorstehende Schulter 33 auf. Der Außendurchmesser des zylindrischen Einpressbereiches 32 bildet mit dem Innendurchmesser der kreisförmigen Einpressöffnung 22 eine Presspassung. Die Schulter 33 dient als ein Axialanschlag, wobei die Schulter 33 auf dem Rand der Einpressöffnung 22 der Basis 20 zum Anschlag kommt. Eine Befestigung kann durch Rollieren oder Verstemmen mittels Verstemmlöcher 21 entlang des Umfangs der Einpressöffnung 22 erfolgen.

In einem Mittenbereich des Sockels 30 ist ein Achsbolzen 40 angeordnet. Über einen mit Nuten versehenen Befestigungsabschnitt 42, welcher beim Gießen des Sockels 30 in diesen eingegossen wird, ist der Achsbolzen 40 fest mit dem Sockel 30 verbunden. Ein nach außen vorstehender Lagerungsabschnitt 44 des Achsbolzens 40 dient zur Aufnahme eines an sich bekannten Rotors für einen Elektromotor.

Zentrisch zur Achse 45 wird ein Stator durch Presspassung auf einen zylindrischen Halteabschnitt 36 des Sockels 30 aufgebracht.

Werden Änderungen etwa am Sockel 30 oder dem Achsbolzen 40 notwendig, so ist gemäß der Erfindung nicht mehr der gesamte Motorträger 10 abzuändern, sondern lediglich der Sockel 30 beziehungsweise der Achsbolzen 40. Weiter bringt die getrennte Ausbildung der plattenförmigen Basis 20 und des Sockels 30 eine schwingungstechnische Verbesserung, da die Kombination eines Gussteiles mit einem Blechteil eine erhöhte Dämpfung bewirkt. Dies ist sowohl günstig für den Elektromotor als auch das Bauteil, an welchem der Elektromotor mit dem Motorträger 10 befestigt wird.

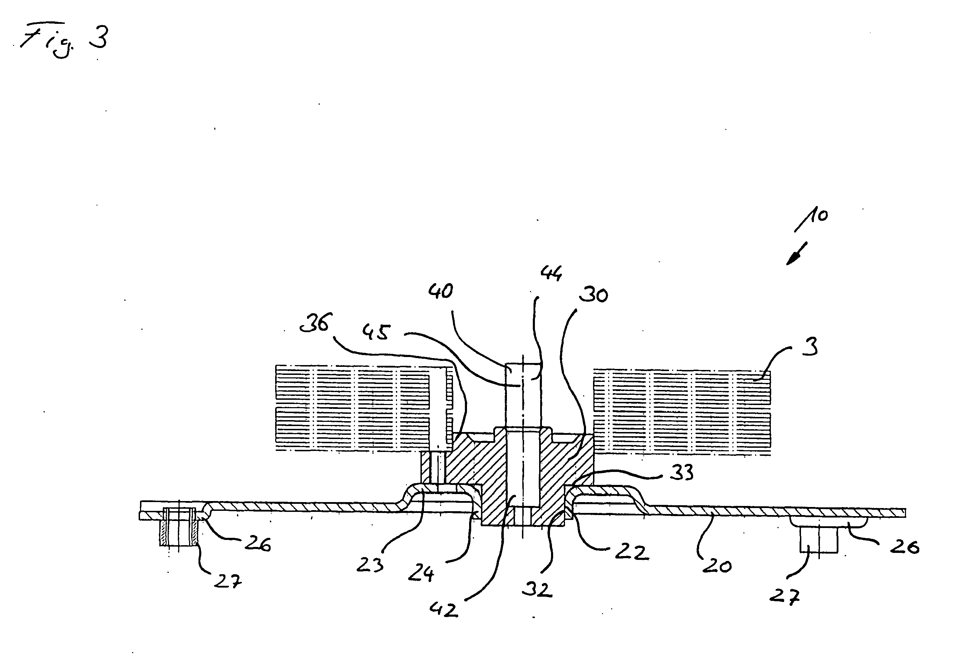

Eine weitere Ausführungsform eines erfindungsgemäßen Motorträgers 10 ist in Figur 3 dargestellt. Dieser ist grundsätzlich gleich zu dem vorausgehend beschriebenen Motorträger 10 aufgebaut, wobei Teile gleicher Funktion mit dem gleichen Bezugszeichen versehen sind. Gemäß Figur 3 ist der auf den Halteabschnitt 36 des Sockels 30 aufgebrachte Stator 3 schematisch angedeutet.

Die Einpressöffnung 22 ist mittels einer ringförmigen Auskragung 24 an einer Einprägung 23 umgrenzt, so dass eine Vergrößerung der Kontaktfläche zwischen der Einpressöffnung 22 und dem zylindrischen Einpressbereich 32 des Sockels 30 gegeben ist. Weiterhin sind bei dieser Ausführungsform die Befestigungshülsen 27 als separate Teile in die Befestigungsabschnitte 26 eingebracht.

## Patentansprüche

1. Motorträger für einen Elektromotor mit
- einer plattenförmigen Basis (20),
- einem daran angeordneten Sockel (30) zur Aufnahme eines Stators (3) und
- einem am Sockel (30) angeordneten Achsbolzen (40) zum Lagern eines Rotors,
**dadurch gekennzeichnet,**
- **dass** der Sockel (30) gegossen ist, wobei beim Gießen des Sockels (30) der Achsbolzen (40) als separates Teil durch Eingießen mit dem Sockel (30) verbunden ist, und
- **dass** die plattenförmige Basis (20) als Blechteil geformt ist, an welchem der Sockel (30) angebracht ist.

2. Motorträger nach Anspruch 1,
**dadurch gekennzeichnet,**
**dass** der Sockel (30) einen Einpressbereich (32) mit einer Schulter (33) aufweist und
**dass** in der Basis (20) eine Einpressöffnung (22) ausgebildet ist, in welche der Sockel (30) mit seinem Einpressbereich (32) bis zur Schulter (33) mit Presspassung eingefügt ist.

3. Motorträger nach Anspruch 2,
**dadurch gekennzeichnet,**
**dass** am Einpressbereich (32) und der Einpressöffnung (22) mindestens ein radiales Formelement zum Bilden einer in Umfangsrichtung wirkenden Formschlussverbindung angeordnet ist.

4. Motorträger nach Anspruch 2 oder 3,
**dadurch gekennzeichnet,**
**dass** die Basis (20) entlang der Einpressöffnung (22) eine Auskragung (24) aufweist.

5. Motorträger nach einem der Ansprüche 1 bis 4,
**dadurch gekennzeichnet,**
**dass** der Achsbolzen (40) zur Verbindung mit dem Sockel (30) zumindest bereichsweise aufgeraut, insbesondere mit einer Rändelung, Riffelung oder Nuten (41) versehen ist.

6. Motorträger nach einem der Ansprüche 1 bis 5,
**dadurch gekennzeichnet,**
**dass** der Sockel (30) als Aluminium-Druckgussteil gefertigt ist.

7. Motorträger nach einem der Ansprüche 1 bis 6,
**dadurch gekennzeichnet,**
**dass** die Basis (20), der Sockel (30) und der Achsbolzen (40) als modulare Bauteile vorgesehen sind.

8. Motorträger nach einem der Ansprüche 1 bis 7,
**dadurch gekennzeichnet,**
**dass** an dem Sockel (30) ein Stator (3) und an dem Achsbolzen (40) ein Rotor angeordnet sind, wobei ein Elektromotor gebildet ist.

9. Verfahren zum Herstellen eines Motorträgers (10) für einen Elektromotor, insbesondere nach einem der Ansprüche 1 bis 8,
**dadurch gekennzeichnet,**
- **dass** ein Sockel (30) gegossen und dabei ein Achsbolzen (40) als separates Teil eingegossen und mit dem Sockel (30) fest verbunden wird und
- **dass** der Sockel (30) mit dem Achsbolzen (40) an einer aus Blech gefertigten, plattenförmigen Basis (20) befestigt wird.

## Claims

1. A motor mount for an electric motor comprising
- a plate-like base (20),
- a pedestal (30) disposed thereon for accommodation of a stator (3) and
- an axle pin (40) disposed on said pedestal (30) for mounting a rotor,
**characterized in**
**that** said pedestal (30) is cast, and during casting of said pedestal (30) the axle pin (40) is attached to the pedestal (30) as a separate part by a potting procedure and
**that** the plate-like base (20) is in the form of a sheet metal piece, on which the pedestal (30) is mounted.

2. The motor mount according to claim 1, **characterized in that** said pedestal (30) comprises a press-in region (32) including a shoulder (33) and that in said base (20) a press-in opening (22) is formed, into which said pedestal (30) with its press-in region (32) is inserted as far as said shoulder (33) with a press fit.

3. The motor mount according to claim 2, **characterized in that** at said press-in region (32) and said press-in opening (22) there is disposed at least one radial shaped element for forming a positive fit acting in the circumferential direction.

4. The motor mount according to claim 2 or claim 3, **characterized in that** said base (20) comprises an overhang (24) along said press-in opening (22).

5. The motor mount according to any one of claims 1 to 4, **characterized in that** for attachment to said pedestal (30) said axle pin (40) is roughened at least in certain regions, such roughening being, in particular, in the form of knurling, fluting, or grooving (41).

6. The motor mount according to any one of claims 1 to 5, **characterized in that** said pedestal (30) is manufactured as an aluminum die-cast piece.

7. The motor mount according to any one of claims 1 to 6, **characterized in that** said base (20), said pedestal (30), and said axle pin (40) are provided as modular components.

8. The motor mount according to any one of claims 1 to 7, **characterized in that** a stator (3) is disposed on said pedestal (30) and a rotor is disposed on said axle pin (40), thereby forming an electric motor.

9. A method for producing a motor mount (10) for an electric motor, particularly according to any one of claims 1 to 8, **characterized in that** a pedestal (30) is cast and concurrently an axle pin (40) is potted as a separate part and is firmly attached to said pedestal (30) and that said pedestal (30) including said axle pin (40) is fixed to a plate-like base (20) made of sheet metal.

## Revendications

1. Support de moteur pour un moteur électrique comportant:
- une base (20) en forme de plaque,
- un socle (30) sur la base pour recevoir un stator (3), et
- un goujon d'axe (40) sur le socle (30) pour servir de palier à un rotor,
**caractérisé en ce que**
- le socle (30) est coulé et lors de sa coulée, le goujon d'axe (40) est relié comme pièce séparée au socle (30) par la coulée, et
- la base (20) en forme de plaque est une pièce en tôle munie du socle (30).

2. Support de moteur selon la revendication 1,
**caractérisé en ce que**
le socle (30) comporte une zone enfoncée à la presse (32) et son épaulement (33), et
la base (20) comporte une ouverture d'enfoncement (22) dans laquelle le socle (30) est inséré avec sa zone enfoncée de force (32) jusqu'à l'épaulement (33) par un ajutage pressé.

3. Support de moteur selon la revendication 2,
**caractérisé en ce que**
la zone enfoncée de force (32) et l'ouverture pour l'enfoncement (22) comporte au moins un élément de forme, radial, constituant une liaison par la forme agissant dans la direction périphérique.

4. Support de moteur selon la revendication 2 ou 3,
**caractérisé en ce que**
la base (20) comporte une collerette en saillie (24) le long de l'ouverture d'enfoncement de force (22).

5. Support de moteur selon les revendications 1 à 4,
**caractérisé en ce que**
le goujon d'axe (40) est rendu rugueux au moins par zones pour la liaison au socle (30) et comporte notamment un moletage, un striage ou des rainures (41).

6. Support de moteur selon les revendications 1 à 5,
**caractérisé en ce que**
le socle (30) est une pièce de fonte d'aluminium sous pression.

7. Support de moteur selon les revendications 1 à 6,
**caractérisé en ce que**
la base (20), le socle (30) et le goujon d'axe (40) sont des pièces modulaires.

8. Support de moteur selon les revendications 1 à 7,
**caractérisé en ce qu'**
un stator (3) est prévu sur le socle (30) et un rotor sur le goujon d'axe (40) pour former un moteur électrique.

9. Procédé de fabrication d'un support de moteur (10) pour un moteur électrique notamment, selon les revendications 1 à 8,
**caractérisé en ce qu'**
- on coule un socle (30) et on intègre par coulée un goujon d'axe (40) constituant une pièce séparée qu'on relie solidairement au socle (30), et
- on fixe le socle (30) avec le goujon d'axe (40) à une base (20) en forme de plaque réalisée en tôle.
